# EUROPÄISCHE PATENTSCHRIFT

(11) **EP 0 350 433 B1**
(45) Veröffentlichungstag und Bekanntmachung des Hinweises auf die Patenterteilung: **31.03.1993**
(21) Anmeldenummer: 89730148.7
(22) Anmeldetag: 21.06.1989
(51) Int. Cl.: B65G 43/10, B65G 13/06

(54) **Rollenbahn**
Roller conveyor
Transporteur à rouleaux

(30) Priorität: 08.07.1988 DE 3823657
(43) Veröffentlichungstag der Anmeldung: 10.01.1990
(73) Patentinhaber: MANNESMANN Aktiengesellschaft, 40027 Düsseldorf (DE)
(72) Erfinder: Jahns, Werner, Dipl.-Ing., D-6453 Seligenstadt (DE); Uecker, Heinz, Dipl.-Ing., D-6050 Offenbach (DE)
(74) Vertreter: Meissner, Peter E., Dipl.-Ing.

(56) Entgegenhaltungen:
- DE-A- 3 215 921
- DE-B- 2 119 633
- FR-A- 904 309
- GB-A- 691 201

## Beschreibung

Die Erfindung betrifft eine Rollenbahn mit einer Reihe von Förderplätzen, deren Tragrollen wahlweise antreibbar und stillsetzbar sind.

Bei einer Rollenbahn nach dem DE-GM 18 70 780 werden alle Tragrollen einer Förderbahn von einem gemeinsamen, unter den Tragrollen entlanggeführten Gurt angetrieben, wobei die einzelnen Stauplätze durch Absenken des Gurtes antriebslos sind. Das darauf befindliche Fördergut wird aber nicht angehalten und kann über den nicht angetriebenen Abschnitt hinwegrollen. Bei einer Rollenbahn nach der DE-OS 32 15 921 wird jede einzelne Rolle in aufwendiger Weise von einem Motor angetrieben.

Aufgabe der Erfindung ist es daher, eine preiswerte und zuverlässig arbeitende Rollenbahn mit Trenn- und Staueffekt zu schaffen. Diese Aufgabe wird dadurch gelöst, daß jeder Förderplatz einer Rollenbahn einen eigenen Antriebsmotor mit einem Schaltgerät hat und daß mehrere Schaltgeräte steuerungsmäßig als Kaskade geschaltet sind, wobei nur das erste Schaltgerät einer Kaskade an einen übergeordneten Schaltschrank angeschlossen ist. Unabhängig davon, ob der Förderplatz am Anfang, innerhalb oder am Ende einer Kaskade angeordnet ist, werden immer die gleichen Schaltgeräte verwendet. Für jede kaskade wird nur eine Verbindung zum Schaltschrank benötigt, der jede Kaskade als einen einzigen Antrieb betrachtet. Dadurch reduziert sich die Anzahl der Schaltelemente im Schaltschrank beträchtlich, ebenso der Installationsaufwand.

In weiterer Ausgestaltung der Erfindung sind die Schaltgeräte integrierter Bestandteil des jeweiligen Förderplatzes mit standardisierten Schnittstellen zu den Schaltgeräten der davor- und dahinterliegenden Förderplätze. Jedes Schaltgerät hat einen Leistungsteil mit einem Motorschütz sowie einen Steuerungsteil mit einem Relais für die Belegtmeldung und mit einer Diodenlogik für die Stau- und Trennfunktion.

Die Kabelverbindungen innerhalb der Kaskaden erfordern ein Minimum an vorgefertigten Kabeln, die einseitig schon bei der Fertigung der Schaltgeräte angeschlossen werden. Außerdem sind die Anschlüsse bei allen Schaltgeräten gleichlautend bezeichnet, so daß die Installation ohne Anlagen-Schaltpläne und ohne spezielle Kenntnisse erfolgen kann. Es genügt lediglich ein einfaches Anschluß-Schema, das vorzugsweise in den Deckel eingeklebt ist.

Ein Ausführungsbeispiel der Erfindung ist in der Zeichnung dargestellt und im folgenden erläutert. Es zeigen
- Fig. 1: einen Teil einer Staurollenbahn mit drei Förderplätzen in der Seitenansicht,
- Fig. 2: ein Schaltgerät (11=21=31=41) in perspektivischer Darstellung,
- Fig. 3: das Anordnungsschema einer aus vier Schaltgeraten bestehenden Kaskade
- Fig. 4: die Schaltung eines Schaltgerätes (11=21=31=41).

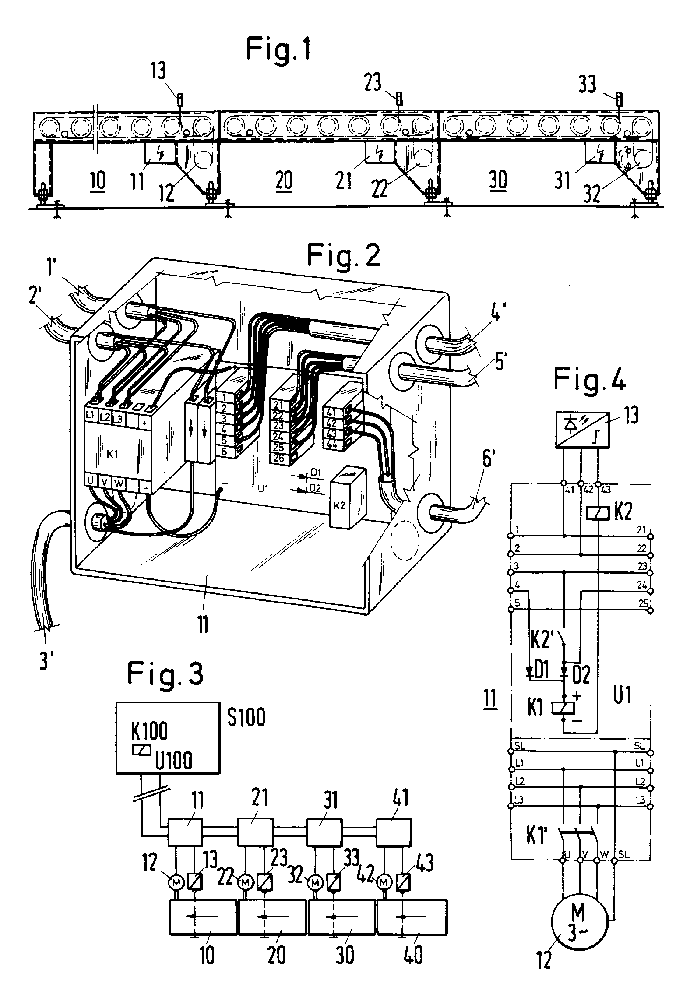

Das Förderbahn-Teilstück nach der Fig. 1 hat die Stauplätze 10, 20 und 30 mit den Antriebsmotoren 12, 22 und 32, den Sensoren 13, 23 und 33 und mit den Schaltgeräten 11,21,31, die zusammen eine Kaskade bilden und vom Schaltgerät 11 aus an einen entferntstehenden Schaltschrank S100 angeschlossen sind (s. Fig. 3).

Beim Schaltkasten 11 nach Fig. 2 sind die Kabel mit den Nummern 1′ bis 6′ versehen. Kabel 1′ ist die 380 V-Zuleitung vom Schaltschrank S100 bzw. vom stromabwärts benachbarten Schaltgerät zum Leistungsteil K1. Kabel 2′ ist die 380 V-Verbindung vom Leistungsteil K1 zum Nachbargerät stromaufwärts. Das Kabel 3′ führt zu dem Motor 12 (22,32,42). Das Kabel 4′ ist die 24 V-Steuerleitung und kommt entweder von der Logik U100 des Schaltschrankes S100 oder vom Schaltgerät stromabwärts und führt zum Steuerungsteil U1. Das Kabel 5′ ist die Steuerleitungs- Verbindung zum nächsten Schaltgerät stromaufwärts. Das Kabel 6′ führt zu dem zugeordneten Sensor 13 (23,33 und 43). Der Anschluß der Kabel 1′, 3′, 4′ und 6′ erfolgt mit der Gerätefertigung. Die Kabel 2′ und 5′ entsprechen den Kabeln 1′ bzw. 4′ der Nachbargeräte und müssen nach der Montage der Förderer angeschlossen werden. Jeweils beim stromaufwärts letzten Gerät einer Kaskade entfallen die Kabel 2′ und 5′. Über die Verbindungen + und - ist der Leistungsteil K1 mit dem Steuerungsteil U1 verbunden. Das Anschluß-Schema nach Fig. 2 ist in den Deckel der Schaltgeräte eingeklebt.

Fig. 3 zeigt die Steuerung mit den erfindungsgemäßen Kaskaden-Schaltgeräten. Der Schaltschrank S100 hat einen Leistungsteil K100 mit Logik U100 für einen Antrieb. Die Schaltgeräte 11, 21, 31 und 41 sind in die Forderer integriert und durch standardisierte kurze Leitungen untereinander verkabelt. Nur das Schaltgerät 11 ist mit dem Schaltschrank S100 verbunden. Von den einzelnen Stauplätzen 10,20,30 und 40 gelangt die Belegtinformation über die Sensoren 13, 23, 33 und 43 zu den Schaltgeräten 11, 21, 31 und 41 und steuert die Motoren 12, 22, 32 und 42 zum Antreiben der Tragrollen auf den Stauplätzen 10, 20 30 und 40.

Fig. 4 zeigt die Schaltung eines Kaskaden-Schaltgerätes. Der Antriebsmotor 12 läuft, wenn der eigene und/oder der stromabwärts folgende Stauplatz frei ist.

Ist der eigene Stauplatz frei, so ist Realais K2 angezogen. Dadurch wird der Kontakt K2′ dieses Relais geschlossen. Von der Eingangsklemme 3 des Steuerungsteils U1 fließt der Strom über K2′ und die Diode D2 zur Schützspule K1.

Ist der stromabwärts folgende Platz frei, so liegt die Klemme 4 von U1 an Spannung und schaltet über die Diode D1 das Schütz K1 ein. Solange K1 ein ist, läuft der Motor 12.

Die überlagerte Logik U100 des Schaltschrankes S100 muß sicherstellen, daß am Schaltgerät 11 folgende Signale über das Kabel 4′ ankommen:
- Klemme 1: = Versorgungsspannung + 24 V
- Klemme 2: = Bezugspotential OV
- Klemme 3: = + 24 V,solange die Kaskade Laufen soll = Stauförderer ein
- Klemme 4: = + 24 V, solange der Stauförderer an den Folgeförderer (stromabwärts) Ware abgeben soll.

Über Klemme 5 erfährt der Schaltschrank S100, daß der Stauförderer nicht ganz vollgestaut ist.

## Patentansprüche

1. Rollenbahn mit einer Reihe von Förderplätzen, deren Tragrollen wahlweise antreibbar oder stillsetzbar sind,
dadurch gekennzeichnet,
daß die Tragrollen eines jeden Förderplatzes (10,20,30,40) einen eigenen Antriebsmotor (12,22,32,42) mit zugehörigem Schaltgerät (11,21,31,41) haben und mehrere Schaltgeräte steuerungsmäßig als Kaskade geschaltet sind, wobei nur das erste Schaltgerät einer Kaskade an einen übergeordneten Schaltschrank (S100) angeschlossen ist.

2. Rollenbahn nach Anspruch 1,
dadurch gekennzeichnet,
daß die Schaltgeräte (11,21,31,41) integrierter Bestandteil des jeweiligen Förderplatzes sind mit standardisierten Schnittstellen zu den Schaltgeräten der davor- und dahinterliegenden Förderplätze.

3. Rollenbahn nach Anspruch 1,
dadurch gekennzeichnet,
daß jedes Schaltgerät (11,21,31,41) einen Leistungsteil, bestehend aus einem Motorschütz (k1), sowie einen Steuerungsteil (U1) mit einem Relais (K2) für die Belegtmeldung mit einer Diodenlogik (D1,D2) für die Stau- und Trennfunktionen hat.

4. Rollenbahn nach Anspruch 3,
dadurch gekennzeichnet,
daß jedes Schaltgerät (11,21,31,41) bei der Fertigung mit standardisierten Kabeln für Netzzuleitung, Steuerleitung, Motoranschluß und Belegtsensor (13,23,33,43) versehen ist.

5. Rollenbahn nach einem oder mehreren der vorgenannten Ansprüche,
dadurch gekennzeichnet,
daß jedes Schaltgerät (11,21,31,41) zusätzliche Klemmen für eine oder mehrere der Zusatzfunktionen Motorüberwachung, Laufkontrolle, Platzbelegung, Abräumen hat, und daß die Verbindung zum übergeordneten Schaltschrank (S100) über das Schaltgerät (11) am Kaskadenanfang direkt erfolgt.

## Claims

1. A roller conveyor with a series of conveyor spaces, the support rollers of which can be driven or stopped selectively, characterised in that the support rollers of each conveyor space (10, 20, 30, 40) have their own drive motors (12, 22, 32, 42) with associated switchgear (11, 21, 31, 41) and a plurality of switchgear are connected control-wise as a cascade, only the first switchgear of a cascade being connected to an overriding switch box (S100).

2. A roller conveyor according to Claim 1, characterised in that the switchgear (11, 21, 31; 41) are integral constituents of the respective conveyor space with standardised interfaces with the switchgear of the conveyor spaces located before and after them.

3. A roller conveyor according to Claim 1, characterised in that each switchgear (11, 21, 31, 41) has a power section, consisting of a motor protection means (K1), and also a control section (U1) with a relay (K2) for indicating the occupied state with a diode logic (D1, D2) for the stowing and separating functions.

4. A roller conveyor according to Claim 3, characterised in that each switchgear (11, 21, 31, 41) is provided upon production with standardised cables for mains supply, control line, motor connection and occupation sensor (13, 23, 33, 43).

5. A roller conveyor according to one or more of the preceding Claims, characterised in that each switchgear (11, 21, 31, 41) has additional terminals for one or more of the additional functions motor monitoring,
monitoring running, space occupation, clearing, and that the connection to the overriding switch box (S100) takes place directly via the switchgear (11) at the beginning of the cascade.

## Revendications

1. Transporteur à rouleaux, comportant une rangée de sections de transport, dont les rouleaux porteurs peuvent, au choix, être entraînés ou arrêtés,
caractérisé en ce que les rouleaux porteurs de chacune des sections de transport (10,20,30,40) comportent un moteur d'entraînement (12,22,32,42) propre avec un appareil de commande associé (11,21,31,41), et plusieurs appareils de commande sont reliés en cascade, de façon à pouvoir être commandés, seul le premier appareil de commande d'un montage en cascade étant relié à une armoire de commande (S100) associée.

2. Transporteur à rouleaux selon la revendication 1,
caractérisé en ce que les appareils de commande (11,21,31, 41) sont des éléments intégrés de chacune des sections de transport, comportant des jonctions standardisées aux appareils de commande des sections de transport se trouvant devant et derrière elle.

3. Transporteur à rouleaux selon la revendication 1,
caractérisé en ce que chaque appareil de commande (11,21,31,41) comporte un élément de puissance constitué d'un contacteur de moteur (K1), ainsi qu'un élément de commande (U1), ayant un relais (K2) pour le message d'occupation, et une logique à diodes (D1,D2) pour les fonctions d'accumulation et de séparation.

4. Transporteur à rouleaux selon la revendication 3,
caractérisé en ce que, lors de la fabrication, chaque appareil de commande (11,21,31,41) est muni de câbles standardisés pour le raccord au secteur, la liaison de commande, le branchement du moteur et le détecteur d'occupation (13,23,33,43).

5. Transporteur à rouleaux selon une ou plusieurs des revendications précédentes,
caractérisé en ce que chaque appareil de commande (11,21,31,41) comporte des bornes de connexion supplémentaires, pour l'une ou plusieurs des fonctions supplémentaires suivantes, la surveillance du moteur, le contrôle de marche, l'occupation de place, le déchargement, et en ce que la liaison avec l'armoire de commande (S100) associée s'effectue directement par l'intermédiaire de l'appareil de commande (11) au début du montage en cascade.
